# DEMANDE DE BREVET EUROPEEN

(11) **EP 1 433 701 A1**
(43) Date de publication de la demande: **30.06.2004**
(21) Numéro de dépôt: 03293229.5
(22) Date de dépôt: 19.12.2003
(51) Int. Cl.: B64D 17/38

(54) **Dispositif de sécurité pour voilure de parachute**

(30) Priorité: 23.12.2002 FR 0216562
(71) Demandeur: Aerodyne International, 1235 Luxembourg (LU)
(72) Inventeur: Auvray, Michel, 95430 Auvers / Oise (FR)
(74) Mandataire: Wagret, Frédéric

(57) **Abrégé**

L'invention concerne un dispositif de sécurité permettant la liaison détachable entre une voilure (2) de type parachute et un harnais (4) de parachute, comportant une série d'anneaux, anneau du harnais (13), anneau primaire (7) et anneau secondaire (11), permettant la démultiplication de la traction exercée par le parachutiste sur l'anneau du harnais (13) pour libérer la voilure.

Avantageusement, ledit anneau libérateur (7) présente une dimension, selon une direction, plus grande par rapport à toute autre dimension selon toute autre direction.

## Description

La présente invention concerne un dispositif de sécurité permettant la liaison détachable entre une voilure de type parachute et un harnais de parachute.

Il est en effet parfois nécessaire, au cours d'un saut en parachute, de se libérer de sa voilure principale qui s'est, par exemple mal ouverte, .... Une fois la libération réalisée, le parachutiste peut alors ouvrir son parachute de secours.

Cette libération est également souhaitable juste après un atterrissage dans des conditions atmosphériques et/ou environnementales défavorables, par exemple dans un marécage, sur un arbre, un poteau électrique, ou alors en cas de fortes rafales de vent, pour ainsi éviter que le parachutiste, après atterrissage, ne soit emporté et/ou traîné sur le sol.

Il est connu, selon l'art antérieur et, plus précisément, le brevet américain 4 337 913 et le brevet français 2 772 339, un dispositif de sécurité permettant la liaison détachable entre une voilure principale et un harnais de parachute, ledit dispositif comportant :
- Une sangle élévateur, d'axe longitudinal (X-X), présentant une partie supérieure reliée à ladite voilure et, une enchapure primaire liée à un anneau primaire;
- Une enchapure secondaire, fixée sur ladite partie supérieure de ladite sangle, liée à un anneau secondaire ;
- Une drisse souple fixée à ladite sangle et maintenue par un câble verrouillant cette drisse ;
- Un anneau du harnais assujetti audit harnais.

La connexion de l'ensemble est réalisée de la façon décrite ci-après ; l'anneau primaire passe dans l'anneau du harnais puis est replié sur la sangle ensuite l'anneau secondaire est passé dans l'anneau primaire et également replié sur la sangle cet anneau secondaire est maintenu par la drisse souple qui elle-même est verrouillée par le câble de verrouillage.

L'objet des brevets français et américain diffère principalement par la forme de la liaison de la drisse avec la sangle et de la capacité dans le cas du brevet français à permettre à la sangle de mieux s'opposer aux allongements du fait de l'absence d'amoindrissement de sa résistance par le perçage pour le positionnement d'un oeillet.

Ainsi, selon les deux brevets précités, la libération de la voilure principale du parachute se fait par l'extraction des câbles verrouillant les deux libérateurs.

Du fait de la forme de l'anneau du harnais, celui-ci exerce lors de la traction un bras de levier sur l'anneau primaire qui lui-même exerce un bras de levier sur l'anneau secondaire qui exerce un bras de levier sur la drisse et entraîne son déverrouillage.

Le déverrouillage de la drisse a alors pour conséquence une libération de la sangle élévateur, et donc de la voilure.

Le dispositif selon le brevet français fonctionne selon le même principe que le dispositif selon le brevet américain.

Selon les deux dispositifs connus et précédemment décrits, lors de la traction exercée sur l'anneau du harnais, il y a démultiplication de l'effort appliqué, cette démultiplication étant déterminée par le diamètre des différents anneaux.

Le bras de levier de chaque anneau est également fonction du diamètre de l'anneau et du diamètre du tore constituant l'anneau.

Ainsi, une augmentation de la démultiplication ainsi que du bras de levier oblige à augmenter le diamètre des anneaux et à diminuer ou à ne pas augmenter le diamètre du tore constituant les anneaux.

De ce fait, si on veut diminuer l'intensité de l'effort à appliquer au niveau du harnais pour pouvoir libérer la voilure, il faut augmenter le diamètre des différents anneaux.

Ceci est difficilement réalisable au-delà d'une certaine limite à cause de l'encombrement engendré et de la relative plus grande fragilité d'un anneau à diamètre important avec un tore de faible diamètre.

De plus, un anneau avec un diamètre important offre un orifice pouvant permettre le passage indésirable d'objets pouvant nuire au bon fonctionnement du dispositif.

L'objet de la présente invention est d'augmenter la démultiplication et les bras de levier, ainsi que la résistance mécanique sans toutefois augmenter l'encombrement en taille des anneaux.

La présente invention a pour objet un dispositif de sécurité permettant la liaison détachable entre une voilure principale de parachute et un harnais de parachute, comportant :
- Une sangle élévateur, d'axe longitudinal (X-X), présentant une partie supérieure reliée à ladite voilure, et une enchapure primaire liée à un anneau primaire dit libérateur ;
- Une enchapure secondaire, fixée sur ladite partie supérieure de ladite sangle, liée à un anneau secondaire ;
- Une drisse souple fixée à ladite sangle et verrouillée par un câble de verrouillage ;
- Un anneau du harnais assujetti audit harnais,

L'anneau primaire est inséré dans l'anneau du harnais, l'anneau primaire recevant l'anneau secondaire. L'ensemble des anneaux ainsi constitué est maintenu en position plaquée sur la sangle par l'intermédiaire de la drisse verrouillée par le câble de verrouillage.

Le dispositif est caractérisé en ce que ledit anneau primaire présente une dimension, selon une direction, plus grande par rapport à la dimension selon toute autre direction.

Afin d'améliorer la démultiplication de l'effort appliqué, l'anneau primaire est constitué de deux segments semi-circulaires reliés par deux segments droits parallèles. Il peut être également de forme ovale.

Afin d'améliorer la résistance de l'anneau primaire face aux efforts de traction, l'anneau primaire présente un pont de matière faisant entretoise, définissant une première et une seconde lumières.

De manière avantageuse, les lumières sont de forme générale circulaire et/ou semi-circulaires. Ainsi, la première lumière est par exemple de forme semi-circulaire en forme de D, et la seconde lumière est de forme circulaire.

Dans le but d'une utilisation appropriée du dispositif, l'enchapure primaire de la sangle est associée à ladite première lumière et le diamètre de ladite seconde lumière est supérieur au diamètre extérieur dudit anneau secondaire.

Avantageusement, les première et seconde lumières ont sensiblement le même diamètre.

De manière avantageuse, l'anneau primaire peut être prévu plan ou présentant deux plans consécutifs.

La présente invention sera maintenant bien mieux comprise à la lumière de la description suivante, qui ne limite nullement l'invention, en référence aux dessins annexés dans lesquels :
- La figure 1 représente une vue frontale d'un parachutiste en vol ;
- La figure 2 représente une vue frontale du dispositif selon l'invention avec une sangle élévateur selon le dispositif connu par le brevet américain 4 337 913 non verrouillée;
- La figure 3 représente une vue frontale du dispositif de la figure 2, la sangle élévateur étant verrouillée ;
- La figure 4 représente une vue en coupe longitudinale de la sangle de la figure 3 ;
- La figure 5 représente une vue frontale d'une sangle élévateur selon le dispositif connu par le brevet français 2 772 339 dans un état verrouillé ;
- La figure 6 représente une vue en coupe longitudinale de la sangle de la figure 5 ;
- Les figures 7 et 8 représentent une première et une seconde formes de réalisation possible du dispositif selon l'invention ;
- La figure 9 représente une vue en coupe latérale de la forme objet de la figure 8.

Par commodité, le dispositif objet de l'invention est référencé par le terme « anneau primaire ».

De plus, « l'état verrouillé » de la sangle élévateur signifie l'état dans lequel se trouve la sangle avant la libération de la voilure, et « l'état déverrouillé » quand la voilure a été libérée.

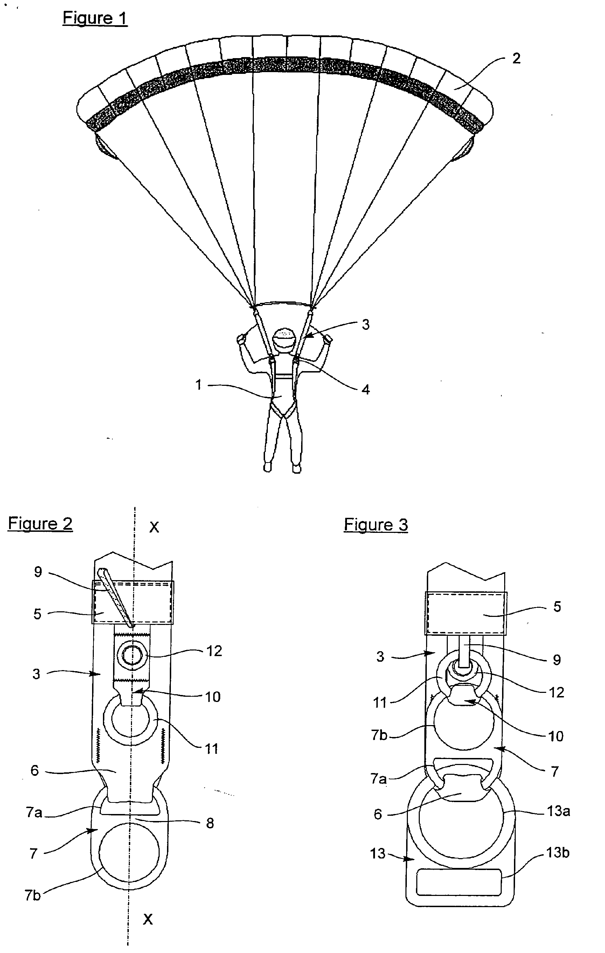

La figure 1 représente un parachutiste 1 en vol avec sa voilure 2 qui est reliée par l'intermédiaire d'une sangle élévateur 3 à un harnais 4.

La sangle élévateur 3 est connue en elle-même et peut être de deux types, soit selon le brevet américain 4 337 913, soit selon le brevet français 2 772 339.

Le dispositif selon l'invention peut s'appliquer indifféremment à ces deux types de sangle ou à tout autre type de sangle de type connu en soi permettant la libération d'une voilure principale de parachute.

La figure 2 représente la sangle élévateur selon le brevet américain 4 337 913 avec l'anneau primaire objet de l'invention dans un état déverrouillé.

La sangle élévateur 3, de forme longitudinale d'axe (X-X), est reliée à la voilure 2 (non représentée sur la figure 2) par sa partie supérieure 5 et présente une enchapure primaire 6, associée à un anneau primaire 7.

L'anneau primaire 7, de forme oblongue, présente une première lumière 7a et une seconde lumières 7b ainsi qu'une partie 8 formant entretoise.

La première lumière 7a, de forme générale semi-circulaire en forme de D, est associée à l'enchapure primaire 6.

Selon la figure 2, la seconde lumière 7b est de forme circulaire et a un diamètre sensiblement identique à celui du demi-cercle de la première lumière 7a.

La sangle élévateur 3 comporte au niveau de sa partie supérieure une drisse 9, dont la fonctionnalité sera explicitée ultérieurement.

La sangle 3 présente également une enchapure secondaire 10 fixée au niveau de la partie supérieure 5 de la sangle 3 sur sa surface frontale et associée à un anneau secondaire 11.

La surface frontale de la sangle 3 réfère à la surface où sont fixées l'enchapure secondaire 10 et la drisse 9.

Par opposition, la surface opposée de la sangle 3 sera appelée la surface dorsale.

Entre la partie supérieure 5 et l'anneau secondaire 11, l'enchapure secondaire présente un oeillet 12 formant une lumière et associé à l'enchapure primaire 6.

L'oeillet 12 présente donc une partie frontale et une partie dorsale.

La figure 3 représente la sangle de la figure 2 mais dans l'état verrouillé.

Dans l'état verrouillé, la sangle élévateur 3 est associée à un élément 13 dit anneau du harnais comportant une première lumière 13a et une seconde lumière 13b.

L'anneau du harnais 13 est destinée à être rendu solidaire au harnais 4 selon tout moyen connu par l'homme de l'art.

Selon la figure 3, la première lumière 13a de l'anneau du harnais est de forme générale circulaire et la seconde lumière 13b est de forme générale rectangulaire.

Pour obtenir l'état verrouillé de la sangle 3, l'anneau primaire 7 associé à l'enchapure primaire est inséré dans l'anneau du harnais 13a et rabattu sur la sangle.

L'anneau secondaire 11 associé à l'enchapure secondaire est inséré dans la lumière 7b de l'anneau primaire et rabattu sur la sangle.

L'anneau secondaire est maintenu en place par la drisse souple 9 qui passe au travers de l'oeillet 12 et est verrouillée par le câble 14 de type connu et représenté sur la figure 4, situé dans la partie dorsale de la sangle 3.

Le diamètre de la première lumière 13a de l'anneau du harnais 13 est plus grand que le diamètre de la seconde lumière 7b de l'anneau primaire 7 dont le diamètre est plus grand que le diamètre de l'anneau secondaire 11.

Cette graduation dans les diamètres des différentes lumières des anneaux permet ainsi l'insertion des anneaux les uns avec les autres, comme précédemment expliqué.

La figure 4 représente une vue en coupe latérale de la sangle de la figure 3.

La drisse souple 9 est passée à travers l'anneau secondaire 11 et l'oeillet 12 de manière sensiblement perpendiculaire au plan défini par la sangle élévateur 3.

La sangle élévateur 3 est réalisée en matériau textile, et calculée pour résister aux efforts engendrés par les forces de traction, de type connues.

Il en est de même pour l'enchapure secondaire 10.

Lorsque la sangle est en position verrouillée, elle est soumise en permanence à des forces.

Pour déverrouiller la sangle 3, le parachutiste 1 doit exercer une force de traction sur le câble de verrouillage pour libérer la drisse souple. Sous l'effort permanent appliqué, l'anneau secondaire, devenu libre, pivote, et se dégage de l'anneau primaire, qui lui-même devenu libre se dégage de l'anneau du harnais.

Ainsi, la sangle élévateur 3, et donc la voilure 2, n'est plus reliée au parachutiste 1.

La forme oblongue de l'anneau primaire 7 entraîne l'augmentation de son bras de levier et la présence d'une entretoise 8 permet à celui-ci d'être beaucoup plus résistant par rapport à un anneau dit « classique » c'est-à-dire avec une seule lumière.

En outre, la présence d'une entretoise 8 empêche le pivotement dans son plan de l'anneau dans l'enchapure primaire 6.

La démultiplication de force, indispensable pour pouvoir libérer une voilure 2 en vol, est ainsi accrue tout en garantissant une meilleure sécurité du dispositif libérateur de la voilure.

Selon une application possible de l'invention, l'anneau secondaire peut également présenter une première et une seconde lumières du même type que celles de l'anneau primaire 7.

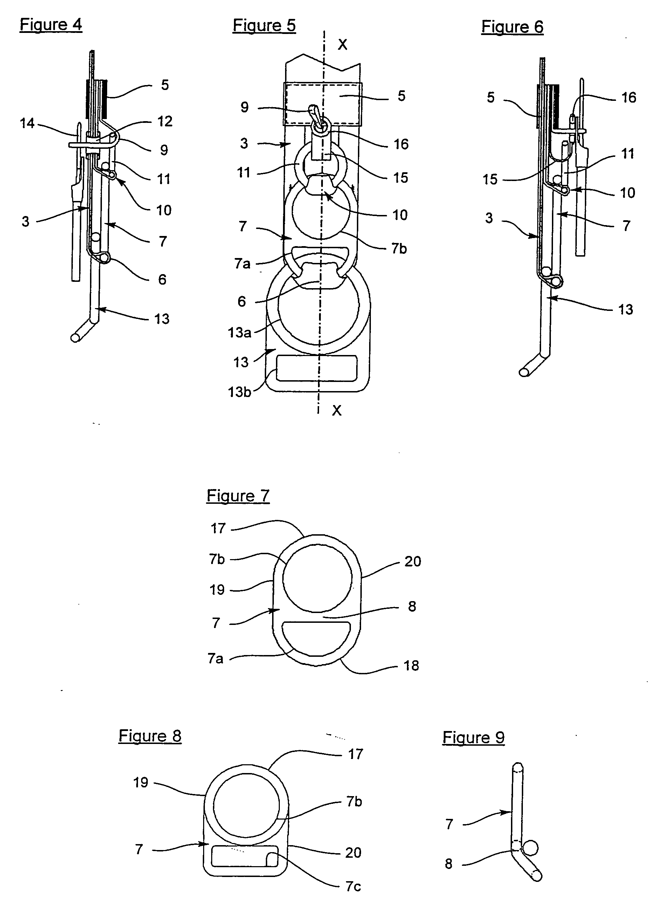

La figure 5 représente une sangle élévateur connue selon le brevet français 2 772 339, dans un état verrouillé.

Les mêmes éléments montrés dans les figures précédentes portent les mêmes numéros de référence.

Le dispositif selon la figure 5 présente une sangle élévateur 3 avec une enchapure primaire 6 associée à un anneau primaire 7 présentant une première 7a et une seconde 7b lumières, la première lumière 7a étant associée à l'enchapure primaire 6.

Un anneau du harnais 13, comportant une première lumière 13a et une seconde lumière 13b, la première lumière 13a de forme générale circulaire et la seconde lumière 13b de forme générale semi-circulaire.

Le diamètre de la première lumière 13a de l'anneau du harnais 13 est supérieur au diamètre de la seconde lumière 7b représentant la dimension de l'anneau primaire 7 dans une direction perpendiculaire à l'axe longitudinal de la sangle 3.

La sangle 3 présente une partie supérieure 5, reliée à une voilure 2 (non représentée sur la figure 5), et sur laquelle est fixée une drisse flexible 9.

Une enchapure secondaire 10, associée à un anneau secondaire 11, est également fixée sur la surface frontale de la sangle 3 au niveau de sa partie supérieure 5.

Une enchapure tertiaire 15, présentant un oeillet 16 à son extrémité libre, est fixée sur la surface frontale de la partie supérieure 5 de la sangle 3.

L'anneau secondaire 11 présente un diamètre extérieur inférieur au diamètre de la seconde lumière 7b de l'anneau primaire 7.

L'enchapure tertiaire 15, de forme générale rectangulaire, présente une largeur inférieure au diamètre intérieur de l'anneau secondaire 11, l'oeillet 16 est donc de diamètre inférieur au diamètre intérieur de l'anneau secondaire 11.

Les différentes enchapures (6, 10, 15) sont réalisées dans des matériaux aptes à résister à des forces de traction élevées et connues.

Pour obtenir l'état verrouillé de la sangle 3, l'anneau primaire 7 associé à l'enchapure primaire est inséré dans l'anneau du harnais 13a et rabattu sur la sangle.

L'anneau secondaire 11, associé à l'enchapure secondaire, est inséré dans la lumière 7b de l'anneau primaire et rabattu sur la sangle.

L'anneau secondaire est maintenu en place par l'enchapure tertiaire.

L'enchapure tertiaire, comme cela est représentée sur la figure 6, est verrouillée par l'intermédiaire de la drisse 9 qui est insérée dans l'oeillet 16.

Après avoir traversée l'oeillet 16, la drisse 9 est verrouillée par un câble de verrouillage 14 qui se situe dans la surface frontale de la sangle 3.

La libération de la voilure 2 est réalisée de la même façon que pour le dispositif connu selon le brevet américain (figures 2, 3 et 4).

La figure 7 représente une vue frontale d'une forme de réalisation possible d'un anneau primaire 7.

De manière générale, l'anneau primaire 7 présente une dimension, selon une direction, plus grande par rapport à la dimension selon toute autre direction.

Selon la représentation particulière de la figure 7, l'anneau primaire 7 comporte une première lumières 7a et une seconde 7b lumières ainsi qu'une entretoise 8, formant un pont de matière.

L'anneau primaire 7 est de forme générale oblongue, c'est-à-dire qu'il présente deux segments identiques semi-circulaires (17, 18) reliés par deux segments identiques parallèles droits (19, 20).

L'anneau primaire 7 peut être également de forme ovale.

Les première lumières 7a et seconde lumières 7b peuvent être de toute forme appropriée.

La première lumière 7a est de forme générale circulaire, et la seconde lumière 7 est de forme générale semi-circulaire.

Il peut être ainsi prévu des lumières de forme triangulaire, rectangulaire, pentagonale, hexagonale, et ainsi de suite.

L'anneau primaire 7, est plan, mais peut également, comme cela est représenté au niveau de la vue de face figure 8 et de profil figure 9 posséder une forme cambrée.

## Revendications

1. Dispositif de sécurité permettant la liaison détachable entre une voilure (2) de type parachute et un harnais (4) de parachute, comportant :
- Une sangle élévateur (3), d'axe longitudinal (X-X), présentant une partie supérieure (5) reliée à ladite voilure (2), et une enchapure primaire (6) liée à un anneau primaire (7) ;
- Une enchapure secondaire (10), fixée sur ladite partie supérieure (5) de ladite sangle (3), liée à un anneau secondaire (11);
- Une drisse flexible (9) fixée à ladite sangle (3) et verrouillée par un câble de verrouillage (14) ;
- Un anneau de harnais (13) assujetti audit harnais (4),
ledit anneau primaire (7) étant inséré dans ledit anneau du harnais (13), ledit anneau primaire recevant ledit anneau secondaire (11), l'ensemble des anneaux ainsi constitué étant maintenu en position plaquée sur ladite sangle (3) par l'intermédiaire de ladite drisse (9) verrouillée par ledit câble de verrouillage (14), **caractérisé en ce que** ledit anneau primaire (7) présente un pont de matière faisant entretoise (8).

2. Dispositif selon la revendication 1, **caractérisé en ce que** ledit pont de matière formant entretoise (8) définit une première lumière (7a) et une seconde lumière (7b).

3. Dispositif selon la revendication 2, **caractérisé en ce que** lesdites lumières (7a, 7b) sont de forme générale circulaire et/ou semi-circulaires.

4. Dispositif selon la revendication 2 ou 3, **caractérisé en ce que** ladite première lumière (7a) est de forme semi-circulaire en forme de D.

5. Dispositif selon l'une des revendications 2 à 4, **caractérisé en ce que** ladite seconde lumière (7b) est de forme circulaire.

6. Dispositif selon l'une des revendications 2 à 5, **caractérisé en ce que** ladite enchapure primaire (6) est associée à ladite première lumière (7a).

7. Dispositif selon l'une des revendications 2 à 6, **caractérisé en ce que** le diamètre de ladite seconde lumière (7b) est supérieur au diamètre dudit anneau secondaire (11).

8. Dispositif selon l'une des revendications 2 à 7, **caractérisé en ce que** lesdites première lumière (7a) et seconde lumière (7b) ont sensiblement le même diamètre.

9. Dispositif selon l'une des revendications précédentes, **caractérisé en ce que** ledit anneau primaire (7) est plan.

10. Dispositif selon l'une des revendications 1 à 8, **caractérisé en ce que** ledit anneau primaire (7) présente deux plans consécutifs.

11. Dispositif de sécurité permettant la liaison détachable entre une voilure (2) de type parachute et un harnais (4) de parachute, comportant :
- Une sangle élévateur (3), d'axe longitudinal (X-X), présentant une partie supérieure (5) reliée à ladite voilure (2), et une enchapure primaire (6) liée à un anneau primaire (7) ;
- Une enchapure secondaire (10), fixée sur ladite partie supérieure (5) de ladite sangle (3), liée à un anneau secondaire (11)
- Une drisse flexible (9) fixée à ladite sangle (3) et verrouillée par un câble de verrouillage (14) ;
- Un anneau de harnais (13) assujetti audit harnais (4),
ledit anneau primaire (7) étant inséré dans ledit anneau du harnais (13) ledit anneau primaire recevant ledit anneau secondaire (11), l'ensemble des anneaux ainsi constitué étant maintenu en position plaquée sur ladite sangle (3) par l'intermédiaire de ladite drisse (9) verrouillée par ledit câble de verrouillage (14), **caractérisé en ce que** ledit anneau primaire (7) est soit constitué de deux segments semi-circulaires (17, 18) reliés par deux segments droits parallèles (19, 20), soit de forme ovale, soit présentant une dimension selon une direction plus grande par rapport à la dimension selon toute autre direction, soit de forme oblongue.

12. Dispositif selon la revendication précédente, **caractérisé en ce que** ledit anneau primaire (7) présente un pont de matière formant entretoise (8).
